# EUROPÄISCHE PATENTSCHRIFT

(11) **EP 1 850 715 B1**
(45) Veröffentlichungstag und Bekanntmachung des Hinweises auf die Patenterteilung: **26.01.2011**
(21) Anmeldenummer: 06704286.1
(22) Anmeldetag: 31.01.2006
(51) Int. Cl.: A47J 37/08

(54) **BROTRÖSTER**
TOASTER
GRILLE-PAIN

(30) Priorität: 11.02.2005 DE 102005006350
(43) Veröffentlichungstag der Anmeldung: 07.11.2007
(73) Patentinhaber: BSH Bosch und Siemens Hausgeräte GmbH, 81739 München (DE)
(72) Erfinder: MÜHLBACHER, Richard, 83224 Grassau (DE); SCHÖNFELDER, Thomas, 83250 Marquartstein (DE); KRAMER, Siegmund, 83417 Kirchanschöring (DE)
(86) Internationale Anmeldenummer: PCT/EP2006/050547
(87) Internationale Veröffentlichungsnummer: WO 2006/084802

(56) Entgegenhaltungen:
- US-A- 5 072 662
- US-A- 5 317 960
- US-A1- 2003 159 594

## Beschreibung

Die Erfindung betrifft einen Brotröster, aufweisend ein Gehäuse, wenigstens eine vertikal ausgerichtete Röstkammer, die über wenigstens eine obere Öffnung im Gehäuse zugänglich ist, und einen Röstgutträger zur Aufnahme einer zu röstenden Brotscheibe, der zwischen einer Entnahmestellung und einer Röststellung für die Brotscheibe bewegbar ist.

Die obere Öffnung und die Röstkammer eines Brotrösters sind i.a. derart ausgeführt, dass auch relativ dicke Brotscheiben geröstet werden können. Relativ dünne Brotscheiben können deshalb in der Entnahmestellung des Röstgutträgers derart ungünstig zur Seite kippen, dass sie relativ nahe am durch den Röstvorgang erwärmten Gehäuse anliegen. Ist das Gehäuse besonders stark erwärmt, kann sich die Person, die die geröstete Brotscheibe entnehmen möchte, die Finger verbrennen. Die US 5,317,960 A offenbart einen Brotröster, mit einer Vorrichtung, die das Be- und Entladen mit einer Brotscheibe erleichtert, indem ein Teil des Röstgutträgers kippbar ausgeführt ist.

Die Aufgabe der Erfindung ist es daher, einen Brotröster der eingangs genannten Art derart auszuführen, dass auch relativ dünne Brotscheiben für die Entnahme relativ günstig ausgerichtet sind.

Die Aufgabe der Erfindung wird gelöst durch einen Brotröster, aufweisend ein Gehäuse, wenigstens eine vertikal ausgerichtete Röstkammer, die über wenigstens eine obere Öffnung im Gehäuse zugänglich ist, und einen Röstgutträger zur Aufnahme einer zu röstenden Brotscheibe, der zwischen einer Entnahmestellung und einer Röststellung für die Brotscheibe bewegbar ist, gekennzeichnet durch eine Vorrichtung, die die Brotscheibe in der Entnahmestellung des Röstgutträgers in eine vorbestimmte Position ausrichtet und fixiert. Durch die Vorrichtung wird die fertig geröstete Brotscheibe in der Entnahmestellung möglichst in eine für die Entnahme der Brotscheibe günstige Position gebracht. Kippt die Brotscheibe, bedingt durch die Bewegung des Röstgutträgers von der Röststellung zur Entnahmestellung, ungünstig zur Seite, wird die Brotscheibe durch die Vorrichtung z.B. wieder aufgerichtet und kann somit besser entnommen werden. Handelt es sich bei dem Brotröster um einen so genannten Kompakttoaster, also einem Brotröster mit zwei nebeneinander angeordneten Röstkammern, mit dem zwei Brotscheiben gleichzeitig geröstet werden können, so kann die Vorrichtung derart ausgeführt sein, dass sie die beiden fertig gerösteten Brotscheiben in der Entnahmestellung des Röstgutträgers zueinander kippt.

Die Vorrichtung ist derart ausgeführt, dass sie die Brotscheibe in der Entnahmestellung des Röstgutträgers fixiert. Durch die Fixierung ist sicher gestellt, dass die fertig geröstete Brotscheibe nicht ihre vorbestimmte Position unbeabsichtigt verlässt, indem sie beispielsweise zur Seite kippt.

Gemäß einer besonders bevorzugten Variante des erfindungsgemäßen Brotrösters ist die Vorrichtung zusätzlich derart ausgeführt, dass sie die Brotscheibe in der Röststellung des Röstgutträgers fixiert. Da nicht nur die obere Öffnung im Gehäuse, sondern auch die Röstkammer eines Brotrösters i.a. derart ausgeführt sind, dass auch relativ dicke Brotscheiben geröstet werden können, kann somit einem Kippen relativ dünner Brotscheiben während des Röstvorgangs innerhalb des Röstraums entgegengewirkt werden. Dies führt zu einem besseren Röstergebnis.

Die Vorrichtung, die die Brotscheibe in der Entnahmestellung des Röstgutträgers in der vorbestimmten Position ausrichtet, umfasst nach einer Variante des erfindungsgemäßen Brotrösters zwei flächenhafte Elemente, zwischen denen die Brotscheibe von der Entnahmestellung zur Röststellung geführt wird. Als flächenhafte Elemente kommen insbesondere Drahtgitter in Betracht.

Ist die obere Kante einer der beiden flächenhaften Elemente bezüglich der oberen Kante des anderen flächenhaften Elementes horizontal versetzt angeordnet, wie dies nach einer weiteren Ausführungsform des erfindungsgemäßen Brotrösters vorgesehen ist, so kann die fertig geröstete Brotscheibe in ihrer Entnahmestellung in eine vorbestimmte Position gekippt werden. Diese Ausführungsform ist dann besonders vorteilhaft, wenn es sich bei dem erfindungsgemäßen Brotröster um einen Kompakttoaster handelt. Jede der beiden Röstkammem ist dann mit einer Vorrichtung zum Positionieren der jeweiligen Brotscheibe in der Entnahmeposition ausgestattet. Sind die oberen Kanten der außen angeordneten flächenhaften Elemente jeweils nach oben im Vergleich zu den oberen Kanten der innen angeordneten flächenhaften Elementen angeordnet, so kann die Vorrichtung die beide fertig gerösteten Brotscheiben zueinander kippen.

Ausführungsbeispiele erfindungsgemäßer Brotröster sind in den nachfolgenden schematischen Zeichnungen exemplarisch dargestellt. Es zeigen:
- Figuren 1 bis 4: Einen Kompakttoaster in teilweise geschnittener Darstellung in unter- schiedlichen Betriebszuständen und Ansichten und
- Figur 5: einen weitern Kompakttoaster.

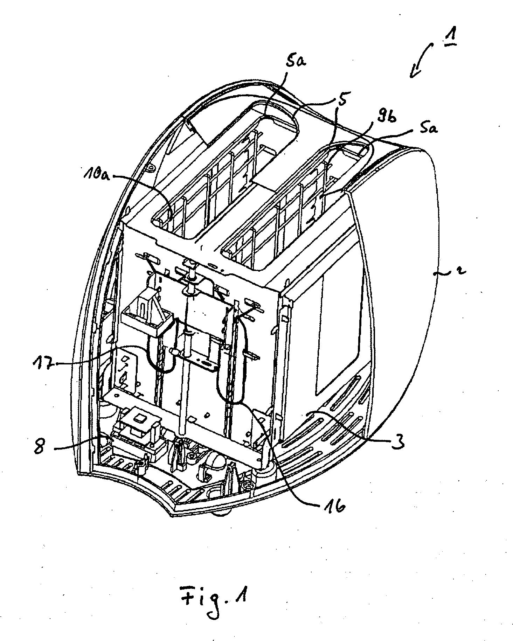

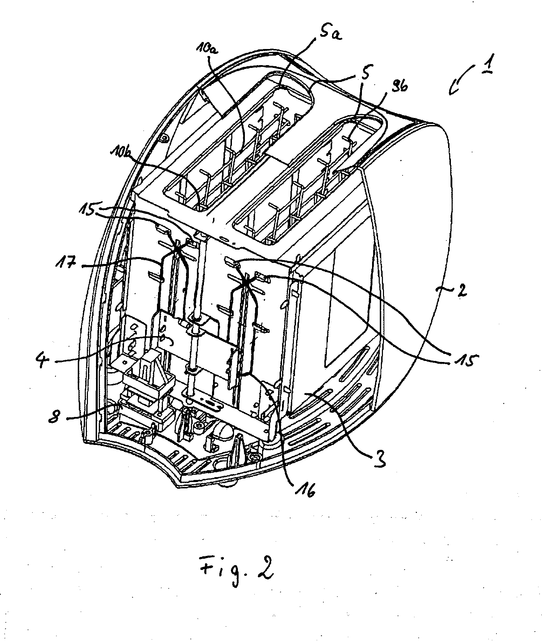

Die Figuren 1 bis 4 zeigen einen Kompakttoaster 1 mit einem Gehäuse 2 und einer Röstkammer 3, in der nebeneinander zwei in den Figuren nicht dargestellte Brotscheiben geröstet werden können. In der Röstkammer 3 ist ein Brotschlitten 4 angeordnet, der von einer in der Fig. 1 gezeigten ersten Position in eine in der Fig. 2 dargestellten zweiten Position bewegt werden kann. Die erste Position ist dafür vorgesehen, über schlitzförmige Öffnungen 5 des Gehäuses 2 und schlitzförmige Öffnungen 5a des Röstraums 3 jeweils eine in den Figuren nicht dargestellte Brotscheibe auf den Brotschlitten 4 zu legen.

Um die Brotscheiben zu rösten, wird der Brotschlitten 4 manuell mit einem mit dem Brotschlitten gekoppelten Griff 6 in die zweite Position, die in der Fig. 2 gezeigt ist, bewegt und mit im Falle des vorliegenden Ausführungsbeispiels flächenhaften Heizelementen 7 geröstet. Während des Röstvorgangs wird der Brotschlitten 4 mit einem Elektromagneten 8 in der zweiten Position gehalten, wie dies allgemein bekannt ist.

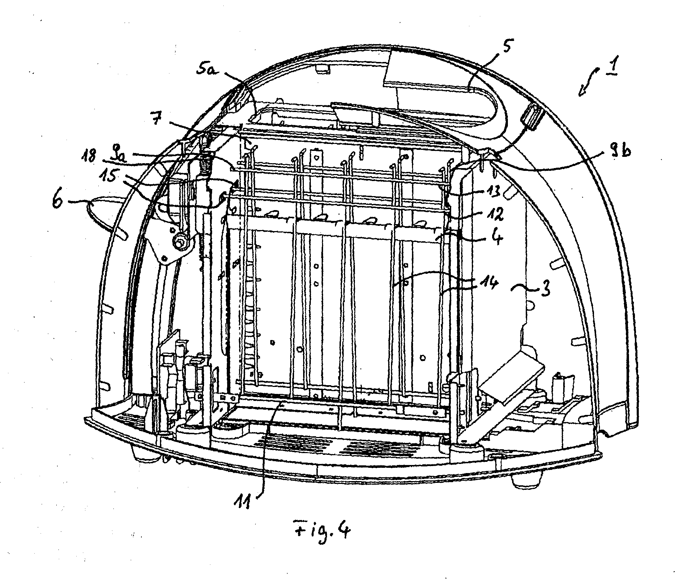

In der Röstkammer 3 sind ferner jeweils zwei Brotgitter 9a und 9b bzw. 10a und 10b angeordnet, die in der Fig. 4 besser zu sehen sind und die dafür vorgesehen sind, die Brotscheiben während des Röstvorgangs zu zentrieren. Jedes der Brotgitter 9a, 9b, 10a und 10b umfasst im Falle des vorliegenden Ausführungsbeispiels eine untere horizontale Metallstange 11 und zwei obere horizontale Metallstangen 12 und 13, sowie mehrere vertikale Metallstangen 14. Die einzelnen Metallstangen 11 bis 14 sind miteinander verschweißt.

Die Brotgitter 9a, 9b, 10a und 10b sind derart in der Röstkammer 3 angeordnet, dass während des Röstvorgangs eine der zu röstenden Brotscheiben zwischen den Brotgittern 9a und 9b und die andere Brotscheibe zwischen den Brotgittern 10a und 10b angeordnet ist. Die Brotgitter 9a, 9b, 10a und 10b sind jeweils an ihren unteren Enden mittels der unteren horizontalen Metallstangen 11 horizontal schwenkbar an dem Röstraum 3 gelagert. An ihren jeweiligen oberen Enden sind die oberen horizontalen Metallstangen 12 der Brotgitter 9a, 9b, 10a und 10b in Öffnungen 15 der Röstkammer 3 bewegbar aufgenommen. Die Öffnungen 15 des Röstraums 3 sind derart ausgeführt, dass die Brotgitter 9a, 9b, 10a und 10b in eine in der Fig. 1 dargestellten ersten Position und eine in der Fig. 2 dargestellten zweiten Position schwenkbar sind. In der in der Fig. 1 gezeigten ersten Position sind die Brotgitter 9a, 9b, 10a und 10b im Wesentlichen entsprechend der Breite der schlitzförmigen Öffnungen 5 des Gehäuses 2 bzw. der schlitzförmigen Öffnungen 5a des Röstraums 3 auseinander.

Der Kompakttoaster 1 umfasst ferner zwei Federelemente 16 und 17 in Form zweier schleifenförmig gebogener Drähte. Das eine Ende des Federelementes 16 ist mit der oberen horizontalen Metallstangen 12 des Brotgitters 9a und das andere Ende des Federelementes 16 ist mit der oberen horizontalen Metallstangen 12 des Brotgitters 9b verbunden. Das eine Ende des Federelementes 17 ist mit der oberen horizontalen Metallstangen 12 des Brotgitters 10a und das andere Ende des Federelementes 17 ist mit der oberen horizontalen Metallstangen 12 des Brotgitters 10b verbunden.

Wird der Brotschlitten 4 mit dem Griff 6 in die zweite Position, die in der Fig. 2 gezeigt ist, gebracht, zieht der Brotschlitten 4 an den Federelementen 16 und 17. Dadurch ziehen die Enden des Federelements 17 die oberen horizontalen Metallstangen 12 der Brotgitter 9a und 9b und die Enden des Federelements 17 die oberen horizontalen Metallstangen 12 der Brotgitter 10a und 10b zueinender, wodurch die Brotgitter 9a und 9b bzw. die Brotgitter 10a und 10b jeweils eine auf dem Brotschlitten 4 liegende Brotscheibe einklemmen.

Am Ende des Röstvorgangs gibt der von einer nicht näher dargestellten Elektronik gesteuerte Elektromagnet 8 in allgemein bekannter Weise den Brotschlitten 4 frei, so dass eine mit dem Brotschlitten 4 und dem Röstraum 3 verbundene Feder 18 diese wieder in ihre erste Position bringt. Dadurch zieht der Brotschlitten 4 nicht mehr an den Federelementen 16 und 17, so dass diese die oberen horizontalen Metallstangen 12 der Brotgitter 9a und 9b bzw. die oberen horizontalen Metallstangen 12 der Brotgitter 10a und 10b wieder auseinander drücken.

Durch die durch die sich zusammenziehende Feder 18 bedingte Bewegung des Brotschlittens 4 von der zweiten zur ersten Position sind die Brotscheiben in der Regel nicht aufrecht, sondern nach einer Seite gekippt ausgerichtet.

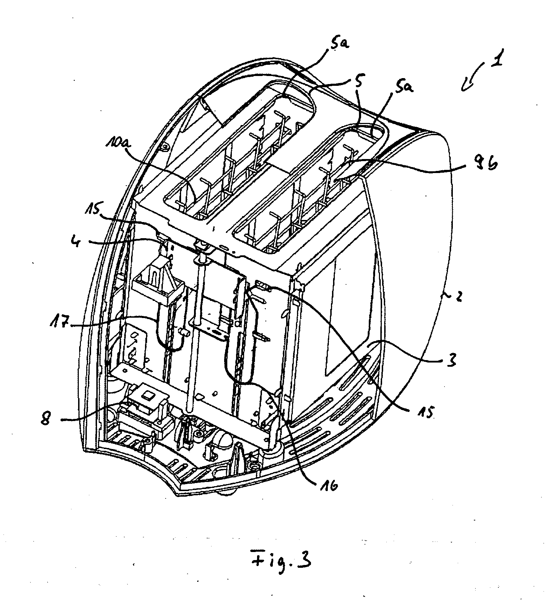

Um die fertig gerösteten Brotscheiben bequemer zu entnehmen, können im Falle des vorliegenden Ausführungsbeispiels der Brotschlitten 4 manuell mit dem Griff 6 in eine in der Fig. 3 gezeigten dritten Position gebracht werden, indem der Brotschlitten 4 mit dem Griff 6 leicht nach oben bezüglich des Röstraums 3 gedrückt wird. In der dritten Position drückt der Brotschlitten 4 die Enden der Federelement 16 und 17 zueinander, wodurch wiederum die oberen horizontalen Metallstangen 12 der Brotgitter 9a und 9b bzw. der Brotgitter 10a und 10b zueinander gedrückt werden. Dadurch werden die Brotscheiben ähnlich wie in der zweiten Position zwischen den Brotgittern 9a und 9b bzw. zwischen den Brotgittern 9a und 9b fixiert bzw. aufrecht ausgerichtet.

Wird der Griff 6 wieder losgelassen, bewegt sich der Brotschlitten 4 wieder in die in der Fig. 1 dargestellten erste Position über und die Brotgitter 9a und 9b bzw. die Brotgitter 10a und 10b lassen die entsprechenden Brotscheiben wieder frei, wobei jedoch die Brotscheiben in ihren aufrechten Positionen verbleiben. Die Brotscheiben können daher bequem vom Kompakttoaster 1 entnommen werden. Alternativ können die Brotscheiben auch vom Kompakttoaster 1 entnommne werden, wenn sich der Brotschlitten 4 in der dritten Position befinden, die Brotscheiben also mit den Brotgittern 9a, 9b, 10a und 10b fixiert sind.

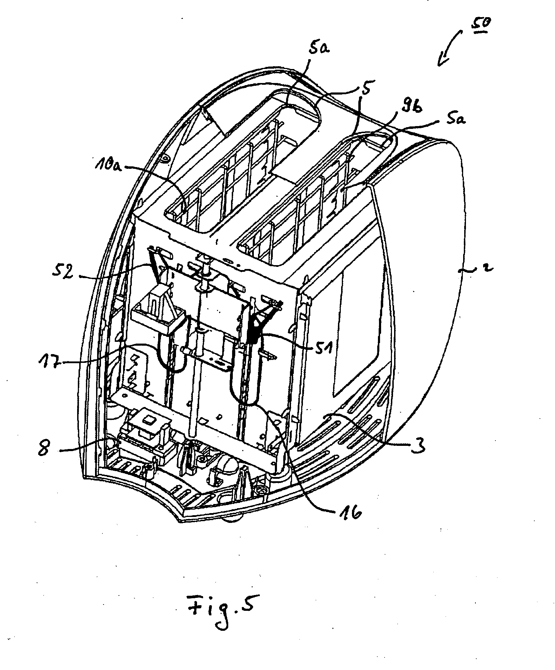

Die Fig. 5 zeigt einen weiteren Kompakttoaster 50. Im Gegensatz zu dem in den Figuren 1 bis 3 dargestellten Kompakttoaster 1 sind die Federelemente 16 und 17, die die Brotgitter 9a, 9b, 10a und 10b des Kompakttoasters 50 in der zweiten Position zusammendrücken, nicht derart ausgeführt, dass sie auch die Brotgitter 9a, 9b, 10a und 10b des Kompakttoasters 50 in der dritten Position zusammendrücken. Dafür umfasst der Brotröster 50 dem Brotträger 4 zugeordnete Führungselemente 51 und 52. Das Führungselement 51 ist derart am Brotschlitten 4 des Kompakttoasters 50 befestigt, dass es die oberen horizontalen Metallstangen 12 der Brotgitter 9a und 9b in der dritten Position gegeneinander drücken. Dadurch wird die Brotscheibe zwischen den Brotgittern 9a und 9b fixiert. Das Führungselement 52 ist derart am Brotschlitten 4 des Kompakttoasters 50 befestigt, dass es die oberen horizontalen Metallstangen 12 der Brotgitter 10a und 10b in der dritten Position gegeneinander drücken. Dadurch wird die Brotscheibe zwischen den Brotgittern 10a und 10b fixiert.

Sind die Führungselemente 51 und 52 derart ausgeführt, dass sie nur das Brotgitter 9a und 10a in der dritten Stellung des in der Fig. 5 dargestellten Kompakttoasters 50 beeinflussen, dann drücken die Brotgitter 9a und 10a in der dritten Position die auf dem Brotschlitten 4 liegenden Brotscheiben zueinander.

Ist die obere horizontale Metallstange 13 des Brotgitters 9a des in den Figuren 1 bis 3 dargestellten Kompakttoasters 1 höher angeordnet als die obere horizontale Metallstange 11 des Brotgitters 9b bzw. ist die obere horizontale Metallstange 13 des Brotgitters 10a des in den Figuren 1 bis 3 dargestellten Kompakttoasters 1 höher angeordnet als die obere horizontale Metallstange 11 des Brotgitters 10b, so werden die auf dem Brotschlitten 4 liegenden Brotscheiben ebenfalls in der dritten Position zueinender gedrückt.

## Patentansprüche

1. Brotröster, aufweisend ein Gehäuse (2), wenigstens eine vertikal ausgerichtete Röstkammer (3), die über wenigstens eine obere Öffnung (5) im Gehäuse (2) zugänglich ist, und einen Röstgutträger (4) zur Aufnahme einer zu röstenden Brotscheibe, der zwischen einer Entnahmestellung und einer Röststellung für die Brotscheibe bewegbar ist, **gekennzeichnet durch** eine Vorrichtung (9a, 9b, 10a, 10b), die die Brotscheibe in der Entnahmestellung des Röstgutträgers (4) in eine vorbestimmte Position ausrichtet und fixiert.

2. Brotröster nach Anspruch 1 , **dadurch gekennzeichnet, dass** die Vorrichtung (9a, 9b. 10a, 10b) derart ausgeführt ist, dass sie die Brotscheibe in der Röststellung des Röstgutträgers (4) fixiert.

3. Brotröster nach einem der Ansprüche 1 oder 2, **dadurch gekennzeichnet, dass** die Vorrichtung zwei flächenhafte Elemente (9a, 9b, 10a, 10b) umfasst, zwischen denen die Brotscheibe von der Entnahmestellung zur Röststellung geführt wird.

4. Brotröster nach Anspruch 34, **dadurch gekennzeichnet, dass** die obere Kante einer der beiden flächenhaften Elemente (9a, 10a) bezüglich der oberen Kante des anderen flächenhaften Elementes (9b, 10b) horizontal versetzt angeordnet ist.

## Claims

1. Toaster, comprising a housing (2), at least one vertically oriented toasting chamber (3) accessible by way of at least one upper opening (5) in the housing (2), and a toasting stock carrier (4) for receiving a slice of bread to be toasted, which carrier is movable between a removal setting and a toasting setting for the slice of bread, **characterised by** a device (9a, 9b, 10a, 10b) which orients and fixes the slice of bread in a predetermined position in the removal setting of the toasting stock carrier (4).

2. Toaster according to claim 1, **characterised in that** the device (9a, 9b, 10a, 10b) is constructed so that the slice of bread is fixed in the toasting setting of the toasting stock carrier (4).

3. Toaster according to one of claims 1 and 2, **characterised in that** the device comprises two areal elements (9a, 9b, 10a, 10b) between which the slice of bread is guided from the removal setting to the toasting setting..

4. Toaster according to claim 3, **characterised in that** the upper edge of one of the two areal elements (9a, 10a) is arranged to be horizontally offset with respect to the upper edge of the other areal element (9b, 10b).

## Revendications

1. Grille-pain présentant un boîtier (2), au moins une chambre à griller (3) dirigée verticalement, qui est accessible par l'intermédiaire d'au moins une ouverture supérieure (5) dans le boîtier (2), et un support de produit à griller (4) destiné à recevoir une tranche de pain à griller, lequel support est déplaçable entre une position de retrait et une position de grillade pour la tranche de pain, **caractérisé par** un dispositif (9a, 9b, 10a, 10b) qui dirige la tranche de pain, placée dans la position de retrait du support de produit à griller (4), dans une position prédéterminée et la fixe.

2. Grille-pain selon la revendication 1, **caractérisé en ce que** le dispositif (9a, 9b, 10a, 10b) est réalisé de manière à ce qu'il fixe la tranche de pain dans la position de grillade du support de produit à griller (4).

3. Grille-pain selon l'une quelconque des revendications 1 ou 2, **caractérisé en ce que** le dispositif comprend deux éléments plans (9a, 10a) entre lesquels la tranche de pain est guidée de la position de retrait vers la position de grillade.

4. Grille-pain selon la revendication 3, **caractérisé en ce que** le bord supérieur de l'un des deux éléments plans (9a, 10a) est disposé en étant horizontalement décalé par rapport au bord supérieur de l'autre élément plan (9b, 10b).
